# EUROPÄISCHE PATENTSCHRIFT

(11) **EP 1 482 612 B1**
(45) Veröffentlichungstag und Bekanntmachung des Hinweises auf die Patenterteilung: **10.08.2011**
(21) Anmeldenummer: 04011898.6
(22) Anmeldetag: 19.05.2004
(51) Int. Cl.: H02G 1/04

(54) **Schutzabdeckung**
Protecting cover
capot de protection

(30) Priorität: 27.05.2003 DE 10324342
(43) Veröffentlichungstag der Anmeldung: 01.12.2004
(73) Patentinhaber: LTB Leitungsbau GmbH, 01139 Dresden (DE)
(72) Erfinder: Hennersdorf, Jörg, Dipl.-Ing., 01662 Meissen (DE)
(74) Vertreter: Miller, Toivo

(56) Entgegenhaltungen:
- US-A- 1 469 989
- US-A1- 2003 010 528
- US-B1- 6 248 956

## Beschreibung

Die Erfindung bezieht sich auf eine Schutzabdeckung für spannungsführende Bauteile, Traversen und daran befestigte Isolatoren von Hochspannungs-Abspannmasten und/oder Hochspannungs-Portalmasten gemäß dem Oberbegriff des Patentanspruchs 1.

Solche Schutzabdeckungen werden dazu genutzt, Personen während Instandhaltungsund/oder Wartungsarbeiten vor einem Kontakt mit nicht spannungsfrei geschalteten Bauteilen zu schützen, und ein Verschmutzen von Isolatoren beim Aufbringen von Schutzanstrichen auf Traversen, Hochspannungs-Abspannmaste und/oder Hochspannungs-Portalmaste zu verhindern.

Bei der Durchführung solcher Arbeiten ist es bis jetzt üblich, unter Spannung stehende Bauteile in Form von Leitern, die an den Isolatoren befestigt sind, spannungsfrei zu schalten. Das Abschalten ist mit finanziellen Verlusten und Problemen bei der Netzführung verbunden. Beim Aufbringen von Schutzanstrichen auf Traversen, Hochspannungs-Abspannmaste und/oder Hochspannungs-Portalmaste kann damit jedoch nicht verhindert werden, dass die daran befestigten Isolatoren dabei verschmutzt werden.

Der Erfindung liegt deshalb die Aufgabe zugrunde, eine Schutzabdeckung für spannungsführende Bauteile, Traversen und daran befestigte Isolatoren von Hochspannungs-Abspannmasten und/oder Hochspannungs-Portalmasten aufzuzeigen, mit der ein Freischalten der Leiter während Instandhaltungs- und Wartungsarbeiten vermieden werden kann, und gleichzeitig das Verschmutzen der Isolatoren ausgeschlossen wird.

Diese Aufgabe wird durch die Merkmale des Patentanspruchs 1 gelöst.

Mit Hilfe der Schutzabdeckung kann ein abgeschirmter Arbeitsbereich geschaffen werden, von dem aus Instandhaltungs- und Wartungsarbeiten, wie das Aufbringen von Schutzanstrichen auf Traversen, Hochspannungs-Abspannmaste und/oder Hochspannungs-Portalmaste durchgeführt werden können, ohne dass eine Freischaltung von unter Spannung stehender Bauteile erforderlich ist. Zudem lassen sich hierdurch die Isolatoren vor Verschmutzungen schützen. Zu der erfindungsgemäßen Schutzabdeckung gehören schirmähnliche Bauelemente. Jeweils eines dieser Bauelemente wird zwischen einer Traverse und jeweils zwei in geringem Abstand parallel zueinander geführten Isolatoren angeordnet, die an der Traverse befestigt sind. Ferner sind flächige Bauteile vorgesehen, die wenigstens bereichsweise unter der Traverse angeordnet werden, und zwar in den Bereichen, in denen die Stromschlaufen von Leiters unter der Traverse hindurch geführt sind. Zudem gehören zu der Schutzabdeckung auch Netze, die in einer definierten Höhe über der abzuschirmenden Traverse aufgespannt werden. Alle Bauelemente werden, so weit das möglich ist, aus einem elektrisch nicht leitenden Material gefertigt. Zudem werden sie so befertigt, dass sie nach dem Ende der Instandhaltungs- und Wartungsarbeiten wieder entfernt werden können.

Weitere erfinderische Merkmale sind in den abhängigen Ansprüchen gekennzeichnet.

Die Erfindung wird nachfolgend an Hand von schematischen Zeichnungen näher erläutert.

Es zeigen:
Fig. 1 eine Schutzabdeckung, die um eine Traverse und Isolatoren angeordnet ist,
Fig. 2 das schirmähnliche Bauelement der Schutzabdeckung gemäß Fig. 1,
Fig. 3 zwei Bauteile, aus denen das schirmähnliche Bauelement gemäß Fig. 2 zusammengefügt ist,
Fig. 4 einen Teilbereich der in Fig. 1 dargestellten Schutzabdeckung,

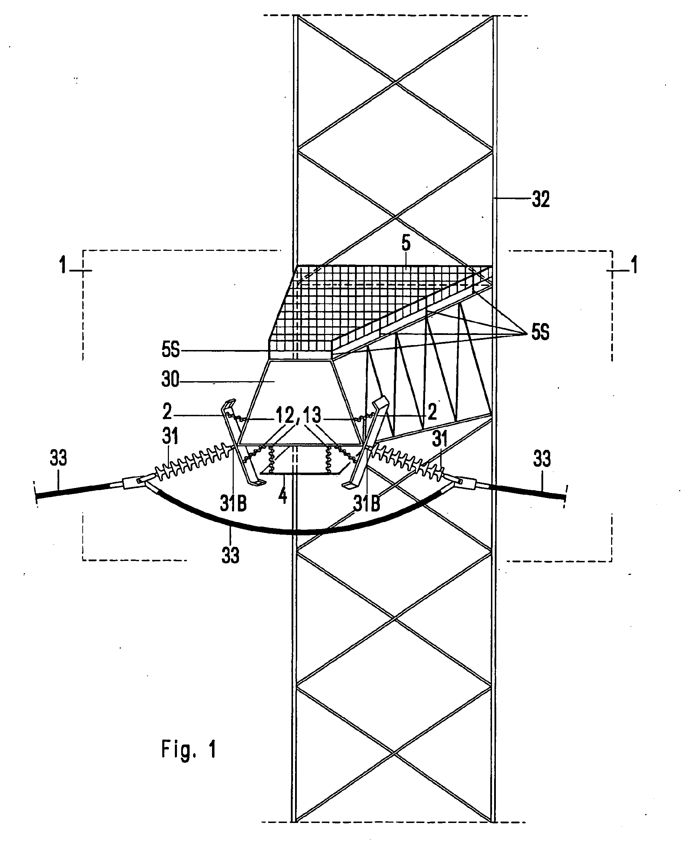

Fig. 1 zeigt eine Schutzabdeckung 1 mit zwei schirmähnlichen Bauelementen 2; einem flächigen Bauteil 4 sowie Netzen 5. Die schirmähnlichen Bauelemente 2 sind zwischen einer Traverse 30 und jeweils zwei Isolatoren 31 angeordnet, die in einem geringen Abstand voneinander geführt sind. Die Isolatoren 31 sind so an der Traverse 30 befertigt, dass jeweils zwei Isolatoren 31 auf der ersten und der zweiten Seite der Traverse 30 angeordnet sind. Die Längsachsen aller Isolatoren 31 sind dabei nahezu horizontal ausgerichtet. Die Traverse 30 und die Isolatoren 31 gehören zu einem Hochspannungs-Abspannmast 32. Die von der Traverse 30 wegweisenden Enden von jeweils zwei dieser Isolatoren 31 sind zusammengefasst, und mit einem Leiter 33 verbunden, der entlang von Hochspannungs-Abspannmasten 32 (hier nur einer dargestellt) geführt ist. Das flächige Bauteil 4 ist auf der Unterseite der Traverse 30 angehängt. Es bildet eine Abschirmung gegenüber der Stromschlaufe des Leiters 33, die unter der Traverse 30 geführt und an den Isolatoren 31 aufgehängt ist.

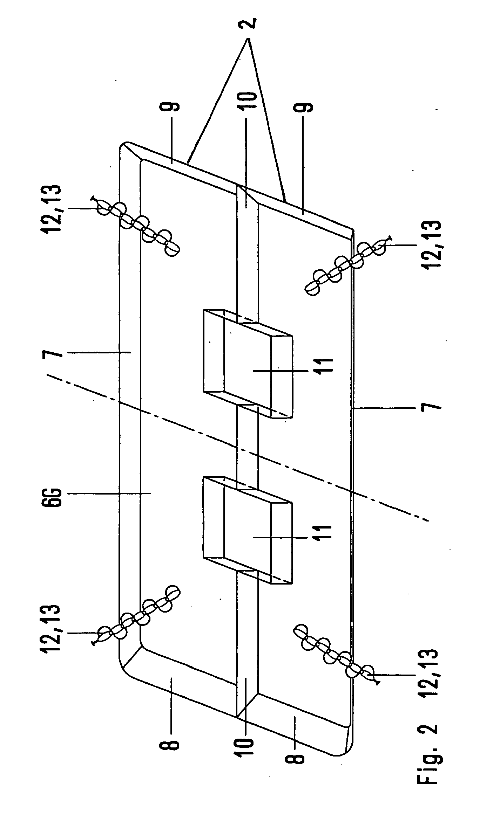

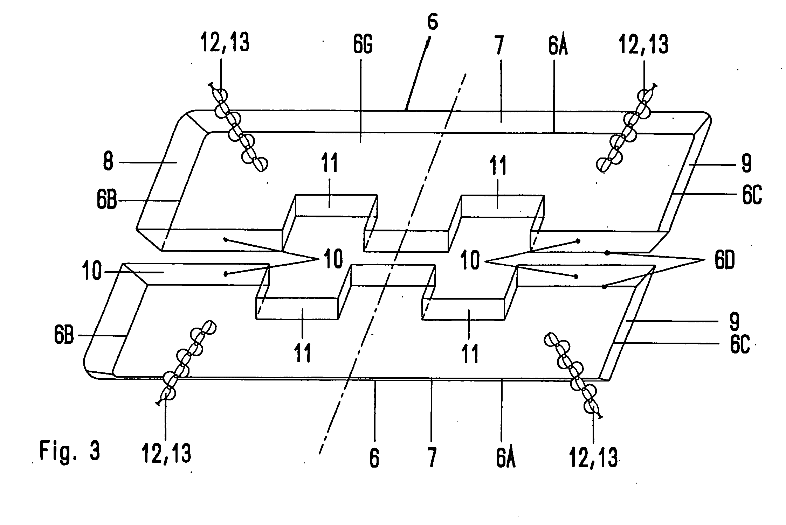

In Fig. 2 ist eines der schirmähnlichen Bauelemente 2 im Detail dargestellt. Wie Fig. 3 zeigt, ist das Bauelement 2 aus zwei Bauteilen 6 zusammengesetzt, die spiegelsymmetrisch zueinander ausgebildet sind. Es wird deshalb nachfolgend oftmals nur eines der Bauelemente 2 beschrieben. Jedes der beiden Bauteile 6 ist mit einer rechteckigen Grundfläche 6G versehen, die beispielsweise eine Länge von 1450 mm hat, und eine Breite von 450 mm aufweist. Die Grundfläche 6G ist im Bereich ihrer Außenkanten mit Rändern 7, 8, 9, 10 versehen, die alle auf der gleichen Seite der Grundfläche 6G ausgebildet sind. Die Ränder 7, 8 und 9 erstrecken sich entlang der ersten langen Begrenzungsseite 6A und den beiden kurzen Begrenzungsseiten 6B und 6C. Sie sind nach oben gezogen, und dabei so nach außen geneigt, dass sie mit der Grundfläche 6G einen Winkel von etwa 110° einschließen. Entlang der vierten Begrenzungsseite 6D ist der Rand 10 ausgebildet, der senkrecht zur Grundfläche 6G ausgerichtet ist. Die Höhe eines jeden Randes 10 beträgt bei dem hier dargestellten Ausführungsbeispiel 30mm bis 40mm. Die Höhen der übrigen Ränder 7, 8 und 9 sind so daran angepasst, dass die nach außen gerichteten Kanten aller Ränder 7, 8, 9 und 10 in einer Ebene liegen.

Das Bauteil 6 ist im Bereich der langen Begrenzungsseite 6D mit zwei Ausnehmungen 11 versehen, die symmetrisch zu seiner Mitte ausgebildet sind. Beide Ausnehmungen 11 sind mit einem U-förmigen Querschnitt versehen und nach außen zu offen. Bei dem hier dargestellten Ausführungsbeispiel weisen die Ausnehmungen 11 eine Länge von 150mm auf und sind 30mm breit. Der Rand 10, der senkrecht zur Grundfläche 6G ausgebildet ist, ist so geführt, dass er im Bereich der Ausnehmungen 11 den inneren Konturen dieser Ausnehmungen 11 folgt: Falls es die Gegebenheiten erfordern, können die beiden Bauteile 6 auch mit nur einer Ausnehmung 11 versehen werden, die jeweils symmetrisch zur Mitte der Begrenzungsseite 6D ausgebildet ist. Die Formen der Ausnehmungen 11 sind nicht auf die hier beschriebenen Ausbildungen beschränkt. Vielmehr können sie die an die jeweiligen Gegebenheiten angepasst werden. Das gleiche gilt auch für alle Abmessungen der Bauteile 6.

Zwischen der Ausnehmung 11 und dem Rand 8, 9 ist jeweils eine Kette 12 installiert, die von einer gespannten Spiralfeder 13 umgeben ist. Die Ketten 12 sind mit ihrem ersten Ende an der Grundfläche 6G befestigt, und zwar so, dass sie und die Ränder 7, 8, 9 und 10 bei der Montage des Bauelements 2 der Traverse 30 zugewandt sind. Der Abstand der Ketten 12 von den Unterkanten der Ränder 8 bzw. 9 beträgt bei dem hier dargestellten Ausführungsbeispiel 225mm, während sie von der Unterkante des Randes 10 einen Abstand von 250mm hat. Die Längen der Ketten 12 und Spiralfedern 13 werden an die jeweiligen Gegebenheiten angepasst.

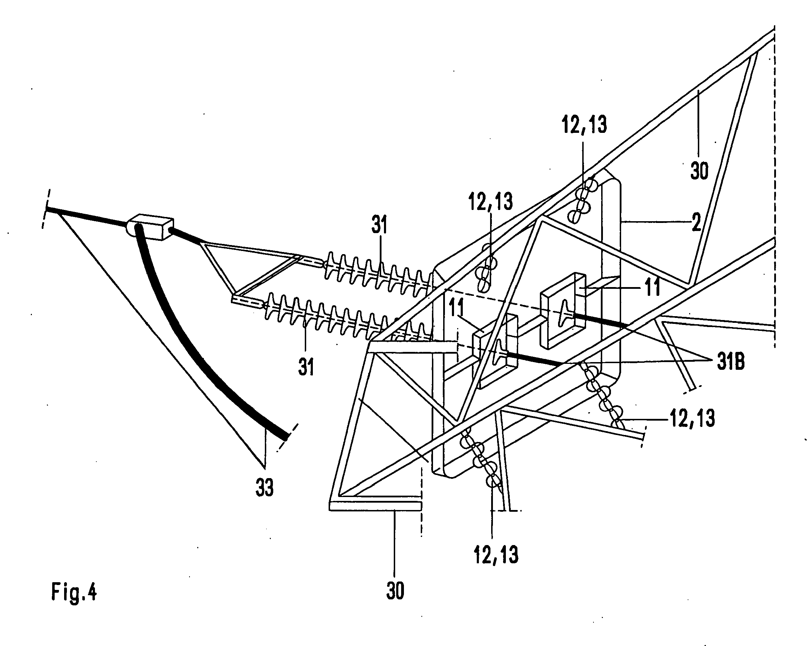

Wie Fig. 2 zeigt, werden die beiden Bauteile 6 für die Bildung des schirmähnlichen Bauelements 2 mit den Rändern 10 gegeneinander gesetzt und lösbar miteinander verbunden. Die beiden Bauteile 6 werden vorzugsweise mittels Schrauben (hier nicht dargestellt) zusammengefügt, und sind hierfür an den erforderlichen Stellen mit Bohrungen (hier nicht dargestellt) versehen. Das Verbinden der beiden Bauteile 6 erfolgt jedoch erst an der Traverse 30 des Hochspannungs-Abspannmasts 32. Hierfür werden die beiden Bauteile 6 zwischen der Traverse 30 und den beiden Isolatoren 31 so angeordnet, dass die Längsachsen ihrer Grundflächen 6G senkrecht zu den Isolatoren 31 ausgerichtet sind. Die Befestigungselemente 31 B der Isolatoren 31 werden durch die Ausnehmungen 11 hindurch geführt; wie in den Figuren 1 und 4 gezeigt. Die Ketten 12 werden zu der Traverse 31 geführt, dort befestigt und durch das Entspannen der Spiralfedern 13 dagegen verspannt.

Das für die Unterseite der Traverse 30 vorgesehene flächige Bauteil 4 ist, wie Fig. 1 zu entnehmen ist, ebenfalls mit Ketten 12 versehen, die von gespannten Spiralfedern 13 umgeben sind. Die Ketten 12 werden bei der Montage mit der Unterseite der Traverse 30 verbunden und durch das Entspannen der Spiralfedern 13 gegen die Unterseite der Traverse 30 verspannt. Die Abmessungen des Bauteils 4 und sein Abstand zur Traverse sind so gewählt, dass ein ausreichender Schutz gegenüber der Stromschlaufe des Leiters 33 gegeben ist, und dennoch das Aufbringen eines Schutzanstriches auf der Unterseite der Traverse 30 möglich wird.

Auf der Oberseite der Traverse 30 sind, wie Fig. 1 zeigt, Stäbe 5S so installiert, dass ihre Längsachsen senkrecht zur Traverse 30 ausgerichtet sind. Mit ihrer Hilfe werden die Netze 5 gehalten, die über der Traverse 30 aufgespannt sind. Die Länge der Stäbe 5S ist so bemessen, dass unter den Netzen 5 ein ausreichend großer Freiraum für Wartungs- und Instandhaltungsarbeiten verbleibt. Durch die Netze 5 wird ein Kontakt mit Leitern (hier nicht dargestellt) verhindert, die an Isolatoren (hier nicht dargestellt) angehängt sind, welche an einer darüber installierten Traverse befestigt sind.

Die Erfindung beschränkt sich nicht nur auf das hier beschriebene Ausführungsbeispiel. Vielmehr umfasst sie alle Variationen der Schutzabdeckung, die dem Kern der Erfindung zugeordnet werden können.

## Patentansprüche

1. Schutzabdeckung für spannungsführende Bauteile (33), Traversen (30) und daran befestigte Isolatoren (31), an die Leiter (33) eines Hochspannungs-Abspannmastes (32) und/oder eines Hochspannungs-Portalmastes angehängt sind, **dadurch gekennzeichnet, dass** aus schirmähnlichen Bauelementen (2), flächigen Bauteilen (4) und Netzen (5) um jede Traverse (30) und die daran befestigten Isolatoren (31) ein abgeschirmter Arbeitsbereich montierbar ist.

2. Schutzabdeckung nach Anspruch 1, **dadurch gekennzeichnet, dass** wenigstens ein schirmähnliches Bauelement (2) zwischen der Traverse (31) und jeweils zwei in geringem Abstand parallel zueinander geführten Isolatoren (30) lösbar befestigt und gegen die Traverse (30) verspannt ist, dass mindestens ein flächiges Bauteil (4) vorgesehen ist, das wenigstens bereichsweise unter der Traverse (30) lösbar gehaltert und dagegen verspannt ist, und dass Netze (5) in einer definierten Höhe über der Traverse (30) angeordnet sind.

3. Schutzabdeckung nach einem der Ansprüche 1 oder 2, **dadurch gekennzeichnet, dass** jedes schirmähnliche Bauelement (2) aus zwei Bauteilen (6) lösbar zusammengefügt ist, die spiegelsymmetrisch zueinander ausgebildet sind, dass jedes der beiden Bauteile (6) eine rechteckige Grundfläche (6G) aufweist, die im Bereich ihrer Außenkanten (6A, 6B, 6C und 6D) mit Rändern (7, 8, 9, 10) versehen ist, die alle auf der gleichen Seite der Grundfläche (6G) angeordnet sind.

4. Schutzabdeckung nach einem der Ansprüche 1 bis 3, **dadurch gekennzeichnet, dass** drei der Ränder (7, 8 und 9), die sich entlang der ersten langen Begrenzungsseite (6A) und den beiden kurzen Begrenzungsseiten (6B und 6C) der Grundfläche (6G) erstrecken, nach oben gezogen, und dabei nach außen geneigt sind, dass entlang der vierten Begrenzungsseite (6D) der Rand (10) senkrecht zur Grundfläche (6G) ausgerichtet ist, und dass die Höhen der Ränder (7, 8, 9 und 10) so aneinander angepasst sind, dass die nach außen gerichteten Kanten alle Ränder (7, 8, 9 und 10) in einer Ebene liegen.

5. Schutzabdeckung nach einem der Ansprüche 1 bis 4, **dadurch gekennzeichnet, dass** jedes Bauteil (6) im Bereich der langen Begrenzungsseite (6D) der Grundfläche (6G) beidseitig der Mitte mit jeweils einer kleinen U-förmigen Ausnehmung (11) oder mittig mit einer großen U-förmigen Ausnehmung (11) versehen ist, und dass der Rand (10) im Bereich der Ausnehmungen 11 den inneren Konturen dieser Ausnehmungen 11 nachgeführt ist.

6. Schutzabdeckung nach einem der Ansprüche 1 bis 5, **dadurch gekennzeichnet, dass** an der Grundfläche (6G) eines jeden Bauteils (6) in einem definierten Abstand von den Rändern (8 und 10 bzw. 9 und 10) eine Kette (12) befestigt und von einer gespannten Spiralfeder (13) umgeben ist, dass alle Ketten (12) und Spiralfedern (13) auf der gleichen Seite der Grundfläche (6G) befestigt und ebenso wie die Ränder (7, 8, 9, 10) nach der Montage der Traverse (30) zugewandt sind.

7. Schutzabdeckung nach einem der Ansprüche 1 bis 6, **dadurch gekennzeichnet, dass** die beiden Bauteile (6) so zu dem schirmähnlichen Bauelement (2) zusammengefügt sind, dass die Ränder (10) der beiden Bauteile (6) gegeneinander gesetzt und lösbar miteinander verbunden sind, und dass das Bauelement (2) eine oder zwei Ausnehmungen (11) mit einem rechteckigen Querschnitt aufweist.

8. Schutzabdeckung nach einem der Ansprüche 1 bis 7, **dadurch gekennzeichnet, dass** das die Grundflächen (6G) der beiden Bauteile (6) vertikal zu zwei im Abstand nebeneinander installierten Isolatoren (31) angeordnet und die Befestigungselemente (31 B) der Isolatoren (31) durch je eine Ausnehmung (11) oder eine gemeinsame Ausnehmung (11) des Bauelements (2) geführt sind, und dass die freien Enden der Ketten (12) zu der Traverse (30) geführt, angehängt und dagegen verspannt sind.

9. Schutzabdeckung nach einem der Ansprüche 1 bis 8, **dadurch gekennzeichnet, dass** das flächige Bauteil (4) an der Unterseite der Traverse (30) wenigstens in dem Bereich angeordnet, in dem ein an den Isolatoren (31) der Traverse (30) angehängter Leiter (33) unter der Traverse (30) hindurch geführt ist, dass das flächige Bauteil (4) mit Ketten (12) versehen ist, die von vorgespannten Spiralfedern (13) umgeben sind, und dass die Ketten (12) an der Unterseite der Traverse (30) lösbar angehängt und gegen die Traverse (30) verspannt sind.

10. Schutzabdeckung nach einem der Ansprüche 1 bis 9, **dadurch gekennzeichnet, dass** in einer definierten Höhe über der Traverse (30) parallel dazu wenigstens bereichsweise die Netze (5) aufgespannt und von Stäben (5S) aus Kunststoff gehalten sind, die senkrecht auf der Traverse (30) aufgestellt und lösbar befestigt sind.

## Claims

1. Protective cover for voltage-carrying components (33), cross members (30) and insulators (31) fastened thereto, on which conductors (33) of a high-voltage dead-end tower (32) and/or of a high-voltage transmission tower are suspended, **characterized in that** a shielded working area can be assembled from shield-like structural elements (2), planar components (4) and nets (5) around each cross member (30) and the insulators (31) fastened thereto.

2. Protective cover according to Claim 1, **characterized in that** at least one shield-like structural element (2) is fastened in a releasable manner between the cross member (30) and in each case two insulators (31) that are guided parallel to one another and at a small distance apart, and is braced against the cross member (30), **in that** there is provided at least one planar component (4), which is secured in a releasable manner at least in some regions under the cross member (30) and is braced against the latter, and **in that** nets (5) are arranged at a defined height above the cross member (30).

3. Protective cover according to either of Claims 1 and 2, **characterized in that** each shield-like structural element (2) is put together in a releasable manner from two components (6) which are formed in a mirror-symmetrical manner with respect to one another, **in that** each of the two components (6) has a rectangular base surface (6G), which is provided in the region of its outer edges (6A, 6B, 6C and 6D) with rims (7, 8, 9, 10) which are all arranged on the same side of the base surface (6G).

4. Protective cover according to one of Claims 1 to 3, **characterized in that** three of the rims (7, 8 and 9), which extend along the first long delimiting side (6A) and the two short delimiting sides (6B and 6C) of the base surface (6G), are pulled upwards and in the process are inclined outwards, **in that** along the fourth delimiting side (6D) the rim (10) is oriented perpendicularly to the base surface (6G), and **in that** the heights of the rims (7, 8, 9 and 10) are matched to each other such that the outwardly directed edges of all the rims (7, 8, 9 and 10) lie in one plane.

5. Protective cover according to one of Claims 1 to 4, **characterized in that** each component (6) is provided in the region of the long delimiting side (6D) of the base surface (6G) with in each case a small U-shaped recess (11) on both sides of the centre or centrally with a large U-shaped recess (11), and **in that** the rim (10) tracks the inner contours of the recesses (11) in the region of these recesses (11).

6. Protective cover according to one of Claims 1 to 5, **characterized in that** a chain (12) is fastened to the base surface (6G) of each component (6) at a defined distance from the rims (8 and 10 or 9 and 10, respectively) and is enclosed by a tensioned spiral spring (13), **in that** all the chains (12) and spiral springs (13) are fastened to the same side of the base surface (6G) and, just like the rims (7, 8, 9, 10) face the cross member (30) following assembly.

7. Protective cover according to one of Claims 1 to 6, **characterized in that** the two components (6) are put together to form the shield-like structural element (2) such that the rims (10) of the two components (6) are placed against one another and are connected together in a releasable manner, and **in that** the structural element (2) has one or two recesses (11) having a rectangular cross section.

8. Protective cover according to one of Claims 1 to 7, **characterized in that** the base surfaces (6G) of the two components (6) are arranged vertically to form two insulators (31) that are installed alongside one another and at a distance apart and the fastening elements (31B) of the insulators (31) are guided through a respective recess (11) or a joint recess (11) in the structural element (2), and **in that** the free ends of the chains (12) are guided to the cross member (30), are suspended and braced against the latter.

9. Protective cover according to one of Claims 1 to 8, **characterized in that** the planar component (4) is arranged on the underside of the cross member (30) at least **in that** region in which a conductor (33) suspended on the insulators (31) of the cross member (30) is guided through under the cross member (30), **in that** the planar component (4) is provided with chains (12) which are enclosed by pretensioned spiral springs (13), and **in that** the chains (12) are suspended in a releasable manner on the underside of the cross member (30) and are braced against the cross member (30).

10. Protective cover according to one of Claims 1 to 9, **characterized in that** the nets (5) are stretched at least in some regions at a defined height above the cross member (30) and parallel thereto and are held by rods (5S) of plastic, which are positioned in a perpendicular manner on the cross member (30) and fastened thereto in a releasable manner.

## Revendications

1. Capot de protection pour des composants de transport de tension (33), des traverses (30) et des isolateurs (31) fixés à celles-ci, auxquels des conducteurs (33) d'un pylône haubané (32) et/ou d'un pylône en portique à haute tension sont suspendus, **caractérisé en ce qu'**une zone de travail blindée, composée d'éléments de construction en forme d'écran (2), de composants plats (4) et de treillis (5), peut être montée autour de chaque traverse (30) et des isolateurs (31) fixés à celle-ci.

2. Capot de protection selon la revendication 1, **caractérisé en ce qu'**au moins un élément de construction en forme d'écran (2) est fixé de façon démontable entre la traverse (30) et respectivement deux isolateurs (31) guidés parallèlement l'un à l'autre à faible distance l'un de l'autre et est serré contre la traverse (30), **en ce qu'**il est prévu au moins un composant plat (4), qui est supporté de façon détachable au moins localement en dessous de la traverse (30) et est serré contre celle-ci, et **en ce que** des treillis (5) sont disposés à une hauteur définie au-dessus de la traverse (30).

3. Capot de protection selon l'une quelconque des revendications 1 ou 2, **caractérisé en ce que** chaque élément de construction en forme d'écran (2) est constitué de façon détachable de deux composants (6), qui sont réalisés de façon symétrique l'un à l'autre, **en ce que** chacun des deux composants (6) présente une face de base rectangulaire (6G) qui est munie, dans la région de ses bords extérieurs (6A, 6B, 6C et 6D), de rebords (7, 8, 9, 10) qui sont tous disposés du même côté de la face de base (6G).

4. Capot de protection selon l'une quelconque des revendications 1 à 3, **caractérisé en ce que** trois des rebords (7, 8 et 9), qui s'étendent le long du premier long bord (6A) et des deux bords courts (6B et 6C) de la face de base (6G), sont tirés vers le haut et en l'occurrence inclinés vers l'extérieur, **en ce que** le rebord (10) s'étendant le long du quatrième côté (6D) est orienté perpendiculairement à la face de base (6G), et **en ce que** les hauteurs des rebords (7, 8, 9 et 10) sont adaptées les unes aux autres de telle manière que les arêtes orientées vers l'extérieur de tous les rebords (7, 8, 9 et 10) se trouvent dans un plan.

5. Capot de protection selon l'une quelconque des revendications 1 à 4, **caractérisé en ce que** chaque composant (6) est muni, dans la région du côté long (6D) de la face de base (6G), respectivement d'un petit évidement en forme de U (11) de part et d'autre du milieu ou d'un grand évidement en forme de U (11) au milieu, et **en ce que** le rebord (10) est conduit, dans la région des évidements (11), suivant les contours intérieurs de ces évidements (11).

6. Capot de protection selon l'une quelconque des revendications 1 à 5, **caractérisé en ce qu'**une chaîne (12) est fixée à la face de base (6G) de chaque composant (6), à une distance définie des rebords (8 et 10 ou 9 et 10) et est entourée d'un ressort hélicoïdal tendu (13), **en ce que** toutes les chaînes (12) et tous les ressorts hélicoïdaux (13) sont fixés sur le même côté de la face de base (6G) et, tout comme les rebords (7, 8, 9, 10), sont tournés vers la traverse (30) après le montage.

7. Capot de protection selon l'une quelconque des revendications 1 à 6, **caractérisé en ce que** les deux composants (6) sont assemblés en un élément de construction en forme d'écran (2), **en ce que** les rebords (10) des deux composants (6) sont placés l'un en face de l'autre et **en ce que** l'élément de construction (2) présente un ou deux évidements (11) de section transversale rectangulaire.

8. Capot de protection selon l'une quelconque des revendications 1 à 7, **caractérisé en ce que** les faces de base (6G) des deux composants (6) sont disposées perpendiculairement à deux isolateurs (31) installés à distance l'un à côté de l'autre et les éléments de fixation (31B) des isolateurs (31) sont guidés chacun à travers un évidement (11) ou à travers un évidement commun (11) de l'élément de construction (2), et **en ce que** les extrémités libres des chaînes (12) sont menées vers la traverse (30), suspendues à celle-ci et serrées contre celle-ci.

9. Capot de protection selon l'une quelconque des revendications 1 à 8, **caractérisé en ce que** le composant plat (4) est disposé sur la face inférieure de la traverse (30), au moins dans la région dans laquelle un conducteur (33) suspendu aux isolateurs (31) de la traverse (30) est mené transversalement en dessous de la traverse (30), **en ce que** le composant plat (4) est muni de chaînes (12), qui sont entourées de ressorts hélicoïdaux précontraints (13), et **en ce que** les chaînes (12) sont suspendues de façon détachable à la face inférieure de la traverse (30) et sont serrées contre la traverse (30).

10. Capot de protection selon l'une quelconque des revendications 1 à 9, **caractérisé en ce que** les treillis (5) sont tendus, au moins localement, à une hauteur définie au-dessus de la traverse (30) parallèlement à celle-ci et sont supportés par des barres en matière plastique (5S), qui sont posées perpendiculairement sur la traverse (30) et sont fixées de façon détachable.
